# EUROPÄISCHE PATENTSCHRIFT

(11) **EP 2 456 836 B1**
(45) Veröffentlichungstag und Bekanntmachung des Hinweises auf die Patenterteilung: **27.05.2015**
(21) Anmeldenummer: 10740185.3
(22) Anmeldetag: 21.07.2010
(51) Int. Cl.: C09D 133/06, C09J 133/06, C04B 26/04, C08F 2/24, C08F 220/18, C09K 21/14

(54) **WÄSSRIGE POLYMERDISPERSIONEN ALS BINDEMITTEL FÜR PUTZE UND ANSTRICHMITTEL MIT VERBESSERTEM BRANDVERHALTEN**
WATER BASED DISPERSIONS, FIRE RERSISTANT BINDERS FOR PLASTERS AND COVERING LAYERS OBTAINED THEREWITH
DISPERSIONS AQUEUSES ET LEURS LIANTS POUR PLATRES ET COUCHES DE REVÊTEMENT PRÉSENTANT DES PROPRIÉTÉS DE RÉSISTANCE AU FEU.

(30) Priorität: 22.07.2009 EP 09166111
(43) Veröffentlichungstag der Anmeldung: 30.05.2012
(73) Patentinhaber: BASF SE, 67056 Ludwigshafen (DE)
(72) Erfinder: COSYNS, Audrey, 68169 Mannheim (DE); ROLLER, Sebastian, 68167 Mannheim (DE); TERRENOIRE, Alexandre, 55576 Sprendlingen (DE); BAUMSTARK, Roland, 67433 Neustadt (DE); JAHNS, Ekkehard, 69469 Weinheim (DE); RUPANER, Robert, 67158 Ellerstadt (DE)
(86) Internationale Anmeldenummer: PCT/EP2010/060511
(87) Internationale Veröffentlichungsnummer: WO 2011/009874

(56) Entgegenhaltungen:
- EP-A1- 0 334 214
- EP-A2- 0 103 253
- WO-A1-2005/095728
- DATABASE WPI Week 200739 Thomson Scientific, London, GB; AN 2007-408584 XP002610719, & JP 2007 100040 A (TOYO INK MFG CO LTD) 19. April 2007 (2007-04-19)

## Beschreibung

Für Baukleber, Spachtelmassen, Putze und Anstriche werden in der Praxis in großem Umfang wässrige Polymer-Dispersionen eingesetzt. Besondere Anforderungen werden dabei an solche Baukleber, Spachtelmassen und Putze gestellt, die im Zusammenhang mit der Wärmedämmung von Gebäuden, insbesondere bei Vollwärmeschutz-Maßnahmen, eingesetzt werden. Dabei werden Wärmedämmplatten, z.B. Polystyrol-Hartschaum- oder Mineralfaserplatten, z.B. auf Fassadenflächen aufgeklebt und dann mit einer Spachtelmasse, Armierungsgewebe egalisiert und dispersionsgebundenen Putzen oberflächenbeschichtet. Eine wichtige Eigenschaft der Wärmedämmverbundsysteme (WDVS) ist dabei die Schwerentflammbarkeit des gesamten Systems. Dabei ist zu berücksichtigen, dass neben den Brandeigenschaften der Dämmplatte auch die organischen Anteile in Klebstoff, Armierung und Deckputz das Brandverhalten mitbestimmen. Bedeutsam ist, welche Polymerklassen zum Herstellen dieser Komponenten verwendet werden.

Bekanntlich gehören Vollwärmeschutzsysteme zu den prüfzeichenpflichtigen Baustoffen. Die für die Deckbeschichtung, d.h. für Putze und Anstriche, wegen ihrer guten Licht- und Witterungsbeständigkeit bevorzugt eingesetzten Polymer-Dispersionen auf Basis von (Meth)acrylsäureestern bzw. deren Copolymerisate mit Styrol, müssen daher unter Zusatz von Brandschutzmitteln verarbeitet werden. Die Polyvinylesterdispersionen bzw. Terpolymer-Dispersionen, die aus Vinylchlorid, Ethylen und Vinylacetat aufgebaut sind, sind zwar aufgrund des günstigen Brandverhaltens ihrer Filme für die Herstellung von Putzen und Anstrichen auch ohne bzw. mit geringem Zusatz an meist hydrophilierenden anorganischen Brandschutzmitteln geeignet, doch muss dieser Vorteil durch erhöhtes Vergilben, schnellere Verschmutzung und Verwitterung erkauft werden. Außerdem nehmen derartige Bindemittel oft erhöhte Mengen Wasser auf, was gegebenenfalls zu Algenbewuchs bzw. Pilzbefall der Oberflächen führen kann.

Schließlich spalten die Vinylchlorid-haltigen Polymerisate bei Bränden Salzsäure ab, die zu sekundären Brandschäden führen kann. Weiterhin besteht die Gefahr der Bildung toxischer Folgeprodukte (z.B. Dioxine) im Brandfall. In der Praxis werden deshalb für die Deckbeschichtungen zur Erzielung eines Kompromisses aus Brandschutz und Gebrauchseigenschaften häufig Dispersionsmischungen, bestehend aus Styrol-AcrylsäureesterCopolymeren und Vinylchlorid-Ethylen-Vinylacetat-Copolymeren eingesetzt.

In der Praxis werden daher u.a. aus Gründen der einfacheren Lagerhaltung PolymerDispersionen gewünscht, die sowohl für die Herstellung der Baukleber und Spachtelmassen als auch für die Herstellung von Putzen und Anstrichen geeignet sind und die im Brandfall keine Salzsäure abspalten, bzw. Dioxine bilden durch die die Löschmannschaft gefährdet und darüber hinaus sekundäre Schäden am Bauwerk verursacht werden können.

Aus der EP 0 103 253 sind Bindemittel für Baukleber, Spachtelmassen und Putze (insbesondere für Vollwärmeschutz-Systeme) bekannt, die aus 55 bis 72 Gew.% Vinylpropionat, 27,5 bis 44,9 Gew.% tert.-Butylacrylat, 0,1 bis 0,5 Gew.% (Meth)acrylsäure und gegebenenfalls weiteren Comonomeren aufgebaut sind. Diese Bindemittel lassen aber im Hinblick auf das Brandverhalten und die Verseifungsbeständigkeit noch zu wünschen übrig und bedürfen des Einsatzes des heute im Markt nur noch schwer zugänglichen Monomers Vinylpropionat.

Aus der EP 0 334 214 sind Bindemittel für Buntsteinputze auf Kunstharzbasis bekannt. Diese Bindemittel sind aus 60 bis 100 Gew.% tert.-Butylester der Acryl- und Methacrylsäure, 0 bis 40 Gew.% eines Acrylsäure- oder Methacrylsäureesters eines nicht tertiären C₁-C₂₀ Alkanols, 0 bis 20 Gew.% Vinylchlorid, Vinylacetat und/oder Vinylpropionat, 0 bis 10 Gew.% (Meth)acrylsäure und/oder (Meth)acrylsäureamid und 0 bis 5 Gew.% sonstiger copolymerisierbarer Monomeren aufgebaut. Diese Bindemittel zeigen aber kein brennendes Abtropfen bei Brand und führen zu einer starken Hitzeentwickling zu Beginn des Brennvorgangs durch entweichendes brennbares Isobuten.

Aufgabe der vorliegenden Erfindung war dementsprechend die Bereitstellung von Polymerdispersionen, die transparente, lichtechte, verseifungs- und witterungsbeständige Filme liefern und die für die Herstellung wasserfester, verseifungsresistenter, witterungs- und vergilbungsbeständiger, schwerentflammbarer Putze und Anstrichstoffe geeignet sind. Insbesondere sollten sie für zementfreie oder -arme Vollwärmeschutzsysteme, d.h. für die Befestigung und Beschichtung von Warmedämmplatten bei der Isolierung von Gebäuden eingesetzt werden können, im Brandfall keinen Chlorwasserstoff abspalten und gute brandtechnische Eigenschaften (kein brennendes Abtropfen, Vermeidung der Flammenausbreitung, Erfüllung spezifischer Tests z.B. SBI, Brandschachtests etc.) aufweisen.

Es wurde nun gefunden, dass diese Aufgabe durch die Verwendung einer wässrigen Polymerdispersion enthaltend wenigstens ein, durch radikalische Ernulsionspolymensation wenigstens eines ethylenisch ungesättigten Monomers (M1) und 25 bis 60 Gew.-% tert. Butyl(meth)acrylat. erhältliches Polymer (P), als Bindemittel in bauchemischen Produkten, dadurch gekennzeichnet, dass die Mischung der Hauptmonomere (HM) ausgewählt ist aus der Gruppe tert.Butyl(meth)acrylat mit Methylmethacrylat, n-BA/Vinylacetat,n-BA / MMA / Vinylacetat, n-BA / Ethylacrylat / Vinylacetat oder BA / MMA I Ethylacrylat, gelöst wird.

Baukleber, Spachtelmassen, Anstrichmittel, Putze und Wärmedämmverbundsysteme werden nachfolgend zusammenfassend auch bauchemische Produkte genannt.

Die erfindungsgemäßen wässrigen Polymerdispersionen sind mit besonderem Vorteil für das Verkleben von Warmedämmplatten, beispielsweise auf Basis von Styrol-Polymerisaten sowie von Glasschaumplatten und Korkplatten, Schaumsilikatdämmplatten, Polyurethanhartschaumplatten und mineralischen Faserdämmstoffen, wie Steinwolle geeignet. Sie können zudem als Bindemittel für Anstrichmittel eingesetzt werden.

Ein erster Gegenstand der Erfindung betrifft die Verwendung einer wässrigen Polymerdispersion enthaltend 25 bis 60 Gew.-% tert. Butyl(meth)acrylat, insbesonders bevorzugt 30-45% sowie wenigstens ein davon verschiedenes ethylenisch ungesättigtes Monomer, erhältlich durch radikalische Emulsionspolymerisation, als Bindemittel in bauchemischen Produkten, insbesondere zur Verbesserung des Brandverhaltens.

Ein weiterer Gegenstand der Erfindung betrifft bauchemische Produkte, wie Anstrichmittel, Putze, Baukleber, Spachtelmassen sowie Wärmedämmverbundsysteme enthaltend die erfindungsgemäßen wässrigen Polymerdispersionen, mit verbessertem Brandverhalten.

Weitere Gegenstände der Erfindung sind die im Folgenden beschriebenen, bevorzugt verwendeten Polymerdispersionen, sowie Putze, Baukleber Spachtelmassen und Anstrichmittel in Form einer wässrigen Zusammensetzung, enthaltend wenigstens eine erfindungsgemäß verwendete Polymerdispersion.

Im Rahmen der vorliegenden Erfindung umfasst der Ausdruck "Alkyl" geradkettige und verzweigte Alkylgruppen, speziell mit 1 bis 8 Kohlenstoffatomen, d.h. für "C₁-C₈-Alkyl".

Geeignete kurzkettige Alkylgruppen sind beispielsweise geradkettige oder verzweigte C₁-C₇-Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Die vorstehenden Ausführungen zu Alkyl gelten sinngemäß auch für die Alkylgruppen in Alkanol, Alkandiol und Aminoalkanol.

Der Ausdruck "Alkylen", wie in Alkylenoxy verwendet, steht für geradkettige oder verzweigte Alkandiyl-Gruppen, bevorzugt mit 1 bis 7 Kohlenstoffatomen, wie beispielsweise Methylen, 1,2-Ethylen, 1,2-Propylen, 1,3-Propylen, 1,2-Butylen, 1,3-Butylen, 1,4-Butylen, 2-Methyl-1,2-propylen, etc.

Der Ausdruck tert. Butyl(meth)acrylat bedeutet im Sinne dieser Anmeldung, tert. Butylacrylat und/oder tert. Butylmethacrylat.

Die erfindungsgemäß verwendete Polymerdispersion enthält wenigstens ein durch radikalische Emulsionspölymerisation wenigstens eines ethylenisch ungesättigten Monomers (M1) und tert. Butyl(meth)acrylat erhältliches Polymer (P).

Zur Herstellung der erfindungsgemäß verwendeten Polymerdispersion wird bevorzugt wenigstens ein α,β-ethylenisch ungesättigtes Monomer (M1) eingesetzt, das vorzugsweise ausgewählt ist unter Estern α,β-ethylenisch ungesättigter Mono- und Dicarbonsäuren mit C₁-C₈-Alkanolen, Estern von Vinyl- oder Allylalkohol mit C₁-C₈-Mono-carbonsäuren, monoethylenisch ungesättigten Carbon- und Sulfonsäuren, primären Amiden α,β-ethylenisch ungesättigter Monocarbonsäuren und deren N-Alkyl- und N,N-Dialkylderivaten, und Mischungen davon.

Weitere geeignete Monomere (M1) sind beispielsweise Vinylaromaten, ethylenisch ungesättigte Nitrile, Ester α,β-ethylenisch ungesättigter Mono- und Dicarbonsäuren mit C₂-C₈-Alkandiolen, Amide α,β-ethylenisch ungesättigter Mono- und Dicarbonsäuren mit C₂-C₈-Aminoalkoholen, N-Vinyllactame, offenkettige N-Vinylamidverbindungen, Ester von α,β-ethylenisch ungesättigten Mono- und Dicarbonsäuren mit Aminoalkoholen, Amide α,β-ethylenisch ungesättigten Mono- und Dicarbonsäuren mit Diaminen, N,N-Diallylamine, N,N-Diallyl-N-alkylamine, vinyl- und allylsubstituierte Stickstoffheterocyclen und Mischungen davon.

Geeignete Ester α,β-ethylenisch ungesättigter Mono- und Dicarbonsäuren mit C₁-C₈-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, , n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat und Mischungen davon.

Geeignete Ester von Vinylalkohol mit C₁-C₈-Monocarbonsäuren sind z. B. Vinylformiat, Vinylacetat, Vinylbutyrat, Vinyllaurat, Vinylstearat, Versaticsäurevinylester und Mischungen davon.

Geeignete ethylenisch ungesättigte Carbonsäuren und Sulfonsäuren oder deren Derivate sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure, Methacrylsäure und Mischungen davon.

Geeignete primäre Amide α,β-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N,N-Dimethyl(meth)acrylamid, N,N-Diethyl(meth)acrylamid, Morpholinyl(meth)acrylamid und Mischungen davon.

Geignete Vinylaromaten sind Styrol, α-Methylstyrol, 2-Methylstyrol, 4-Methylstyrol, 2-(n-Butyl)styrol, 4-(n-Butyl)styrol, insbesondere Styrol, andere Kohlenwasserstoffe sind Butadien, Divinylbenzol, Ethylen und 2-Methylbutadien.

Geeignete ethylenisch ungesättigte Nitrile sind Acrylnitril, Methacrylnitril und Mischungen davon.

Geeignete Ester α,β-ethylenisch ungesättigter Mono- und Dicarbonsäuren mit C₂-C₃₀-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat und Mischungen davon.

Geeignete Amide α,β-ethylenisch ungesättigter Mono- und Dicarbonsäuren mit C₂-C₈-Aminoalkoholen sind z. B. N-(2-Hydroxyethyl)acrylamid, N-(2-Hydroxyethyl)-methacrylamid, N-(2-Hydroxyethyl)ethacrylamid, N-(2-Hydroxypropyl)acrylamid, N-(2-Hydroxypropyl)methacrylamid, N-(3-Hydroxypropyl)acrylamid, N-(3-Hydroxy-propyl)methacrylamid, N-(3-Hydroxybutyl)acrylamid, N-(3-Hydroxybutyl)methacrylamid, N-(4-Hydroxybutyl)acrylamid, N-(4-Hydroxybutyl)methacrylamid, N-(6-Hydroxyhexyl)-acrylamid, N-(6-Hydroxyhexyl)methacrylamid, N-(3-Hydroxy-2-ethylhexyl)acrylamid, N-(3-Hydroxy-2-ethylhexyl)methacrylamid, N-Methyl-N-(2-hydroxyethyl)acrylamid, N-Methyl-N-(2-hydroxyethyl)methacrylamid, N-Methyl-N-(2-hydroxypropyl)acrylamid, N-Methyl-N-(2-hydroxypropyl)methacrylamid, N-Methyl-N-(3-hydroxypropyl)acrylamid, N-Methyl-N-(3-hydroxypropyl)methacrylamid, N-Methyl-N-(3-hydroxybutyl)acrylamid, N-Methyl-N-(3-hydroxybutyl)methacrylamid, N-Methyl-N-(4-hydroxybutyl)acrylamid, N-Methyl-N-(4-hydroxybutyl)methacrylamid, N-Methyl-N-(6-hydroxyhexyl)acrylamid, N-Methyl-N-(6-Hydroxyhexyl)methacrylamid, N-Methyl-N-(3-hydroxy-2-ethylhexyl)acrylamid, N-Methyl-N-(3-hydroxy-2-ethylhexyl)-methacrylamid und Mischungen davon.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam und Mischungen davon.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid, N-Vinylbutyramid und Mischungen davon.

Geeignete Ester von α,β-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat, N,N-Dimethylaminocyclohexyl(meth)acrylat und Mischungen davon. N,N-Dimethylaminoethyl(meth)acrylat, N,N-Diethylaminoethylacrylat, N,N-Dimethylaminopropyl(meth)acrylat, N,N-Diethylaminopropyl(meth)acrylat, N,N-Dimethylaminocyclohexyl(meth)acrylat und Mischungen davon.

Geeignete Amide α,β-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid und Mischungen davon.

Geeignete Monomere (M1) sind weiterhin N,N-Diallylamine und N,N-Diallyl-N-alkylamine und deren Säureadditionssalze und Quaternisierungsprodukte. Alkyl steht dabei vorzugsweise für C₁-C₈-Alkyl. Bevorzugt sind N,N-Diallyl-N-methylamin und N,N-Diallyl-N,N-dimethylammonium-Verbindungen, wie z. B. die Chloride und Bromide.

Geeignete Monomere (M1) sind weiterhin vinyl- und allylsubstituierte Stickstoffhetero-cyclen, wie N-Vinylimidazol, N-Vinyl-2-methylimidazol, vinyl- und allylsubstituierte heteroaromatische Verbindungen, wie 2- und 4-Vinylpyridin, 2- und 4-Allylpyridin, und die Salze davon.

Die zuvor genannten Monomere (M1) können einzeln, in Form von Mischungen innerhalb einer Monomerklasse oder in Form von Mischungen aus verschiedenen Monomerklassen eingesetzt werden.

Bevorzugte Polymere (P) sind durch eine Emulsionspolymerisation erhältlich, bei der der Anteil der Monomere (M1) im Bereich von 40 bis 75 Gew.-%, besonders bevorzugt bevorzugt im Bereich von 55 bis 70 Gew.-%, jeweils bezogen auf das Gesamtgewicht der zur Emulsionspolymerisation eingesetzten Monomere, liegt.

Ebenso bevorzugt sind Polymere (P), die durch eine Emulsionspolymerisation erhältlich sind, bei der der Hauptanteil der Monomere (M1) (im Folgenden als Hauptmonomere (HM) bezeichnet), d.h. mindestens 50 Gew.-%, bevorzugt mindestens 60 Gew.-% und besonders bevorzugt mindestens 80 Gew.-%, bezogen auf das Gesamtgewicht der Monomere (M1), ausgewählt ist unter den zuvor als bevorzugt genannten Estern α,β-ethylenisch ungesättigter Mono- und Dicarbonsäuren mit C₁-C₈-Alkanolen, Estern von Vinyl- oder Allylalkohol mit C₁-C₈-Monocarbonsäuren, monoethylenisch ungesättigten Carbon- und Sulfonsäuren, primären Amiden α,β-ethylenisch ungesättigter Monocarbonsäuren und deren N-Alkyl- und N,N-Dialkylderivaten, vinylaromaten und Mischungen davon. Besonders bevorzugt sind die Hauptmonomere (HM) ausgewählt unter Estern α,β-ethylenisch ungesättigter Mono- und Dicarbonsäuren mit C₁-C₈-Alkanolen, speziell unter Methyl(meth)acrylat, Ethyl(meth)acrylat, n-Propyl(meth)acrylat, Isopropyl(meth)acrylat, n-Butyl(meth)acrylat, sec.-Butyl(meth)acrylat, n-Pentyl(meth)acrylat, n-Hexyl(meth)acrylat, n-Heptyl(meth)acrylat, n-Octyl(meth)acrylat, 2-Ethylhexyl(meth)acrylat, Styrol und Mischungen davon.

Eine besonders geeignete Mischung von tert. Butyl(meth)acrylat mit Hauptmonomeren (HM) für das erfindungsgemäße Verfahren ist beispielsweise tert. Butyl(meth)acrylat mit Methylmethacrylat. Weitere bevorzugte Mischungen von Hauptmonomeren mit ter. Butyl(meth)acrylat sind n-Butylacrylat / Methylmethacrylat, n-Butylacrylat / Styrol, n-Butylacrylat / Vinylacetat, n-Butylacrylat / Methylmethacrylat / Vinylacetat, n-Butylacrylat / Ethylacrylat / Vinylacetat, n-Butylacrylat / Methylmethacrylat / Ethylacrylat.

Der Nebenanteil der Monomere M1 (im Folgenden als Nebenmonomere (NM) bezeichnet), d.h. bis zu 50 Gew.-%, bevorzugt bis zu 40 Gew.-% und besonders bevorzugt bis zu 20 Gew.-%, bezogen auf das Gesamtgewicht der Monomere (M1), ist bevorzugt ausgewählt unter ethylenisch ungesättigten Mono- und Dicarbonsäuren und den Anhydriden und Halbestern ethylenisch ungesättigter Dicarbonsäuren, (Meth)acrylamiden, C₁-C₈-Hydroxyalkyl(meth)acrylaten, C₁-C₈-Hydroxyalkyl(meth)acrylamiden und Mischungen davon. Besonders bevorzugt sind die Nebenmonomere (NM) ausgewählt unter Acrylsäure, Methacrylsäure, Itakonsäure, Maleinsäure, Fumarsäure, Maleinsäureanhydrid, Acrylsäureamid, Methacrylsäureamid, Hydroxyethyl(meth)acrylat und Mischungen davon.

Üblicherweise werden die Nebenmonomere (NM), sofern vorhanden, in einer Menge von wenigstens 0,1 Gew.-%, bevorzugt wenigstens 0,5 Gew.-% und besonders bevorzugt wenigstens 2 Gew.-%, bezogen auf das Gesamtgewicht der Monomere (M1), zur Emulsionspolymerisation eingesetzt.

Die zuvor genannte besonders geeigneten Mischung von Hauptmonomeren (HM) kann mit Nebenmonomeren (NM) kombiniert werden, die insbesondere ausgewählt sind unter Acrylsäure, Methacrylsäure, Itakonsäure, Acrylamid, Methacrylamid und Mischungen davon.

In einer speziellen Ausführungsform umfassen die Monomere (M1) ausschließlich Monomere, die ausgewählt sind unter den zuvor als bevorzugt genannten Hauptmonomeren (HM).

Erfingdungsgemäß ist das Polymer (P) durch radikalische Emulsionspolymerisation wenigstens eines der zuvor beschriebenen Monomere (M1) und tert. Butyl(meth)acrylat erhältlich.

Bei der Herstellung der erfindungsgemäß verwendeten Polymere (P) kann zusätzlich zu den zuvor genannten Monomeren (M1) und tert. Butyl(meth)acrylat wenigstens ein Vernetzer eingesetzt werden.

Monomere, die eine vernetzende Funktion besitzen, sind Verbindungen mit mindestens zwei polymerisierbaren, ethylenisch ungesättigten, nichtkonjugierten Doppelbindungen im Molekül.

Eine Vernetzung kann auch z. B. durch photochemische Aktivierung erfolgen. Dazu kann zur Herstellung der Polymere (P) zusätzlich wenigstens ein Monomeren mit photoaktivierbaren Gruppen eingesetzt werden. Photoinitiatoren können auch separat zugesetzt werden.

Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein. Zur Vernetzung kann ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäureneopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃-C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen oder Trivinylcyclohexan mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, ltaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B.

(Meth)acryloxyalkylpropanale, wie sie in der DE-A-2722097 beschrieben sind. Des Weiteren eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens zwei funktionellen Gruppen, insbesondere zwei bis fünf funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydräzidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Auch durch eine entsprechende Additivierung der wässrigen Polymerdispersion (PD) kann zusätzlich eine Oberflächenvernetzung erzeugt werden. Dazu zählt z. B. die Zugabe eines Photoinitiators oder Sikkativierung. Als Photoinitiatoren kommen solche in Frage, die durch Sonnenlicht angeregt werden, beispielsweise Benzophenon oder Benzophenonderivate. Zur Sikkativierung eignen sich die für wässrige Alkydharze empfohlenen MetallVerbindungen, beispielsweise auf Basis von Co oder Mn (Überblick in U. Poth, Polyester und Alkydharze, Vincentz Network 2005, S 183f).

Die vernetzende Komponente wird vorzugsweise in einer Menge von 0,0005 bis 4,99 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

Eine spezielle Ausführungsform sind Polymerdispersionen (PD), die kleinen Vernetzer einpolymerisiert enthalten.

Die radikalische Polymerisation der Monomere (M1) und tert. Butyl(meth)acrylat kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Pölymeren. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Allylverbindungen, wie z. B. Allylalkohol, Cyclopentadien, Dicyclopentadien, Terpinolen, funktionalisierte Allylether, wie Allylethoxylate, Alkylallylether oder Glycerinmonoallylether.

Bevorzugt werden als Regler Verbindungen eingesetzt, die Schwefel oder Phosphor in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/öder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan, tert-Dodecylmercaptan und Isomermischungen hiervon. Als phosphorhaltiger Regler hat sich Hypophosphorige Säure und deren Salze oder Ester erwiesen.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft die erfindungsgemäße Verwendung von Polymeren (P), die durch radikalische Emulsionspolymerisation ohne Zusatz eines Reglers hergestellt werden.

Zur Herstellung der Polymere (P) werden die Monomere mit Hilfe von radikalbildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, Wasserstoffperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.- Butylhydroperoxid, Azo-bis-isobutyronitril, 2,2'-Azo-bis-(2-amidinopropan)dihydrochlorid oder 2-2'-Azo-bis-(2-methyl-butyronitril). Geeignet sind auch Gemische dieser Initiatoren.

Als Initiatoren können auch Reduktions-/Oxidations-(= Red-Ox)-Initiator Systeme eingesetzt werden. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfnsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 5 Gew.-%, bevorzugt 0,1 bis 2 Gew.-%, bezogen auf alle zu polymerisierenden Monomeren. Es können auch mehrere, verschiedene Initiatoren, gleichzeitig oder nacheinander, bei der Emulsionspolymerisation Verwendung finden.

Die Herstellung der erfindungsgemäß verwendeten Polymere (P), erfolgt üblicherweise in Gegenwart wenigstens einer grenzflächenaktiven Verbindung. Hierfür kommen neben den zuvor genannten Emulgatoren (E) insbesondere Schutzkolloide, wie sie beispielsweise in Houben-Weyl, Methoden der organischen Chemie, Band XIV/1, Makromolekulare Stoffe, Georg Thieme Verlag, Stuttgart, 1961, S. 411 bis 420, beschrieben werden und Emulgatoren, wie sie beispielsweise in Houben-Weyl, Methoden der organischen Chemie, Band 14/1, Makromolekulare Stoffe, Georg Thieme Verlag, Stuttgart, 1961, Seiten 192 bis 208, beschrieben werden, in Betracht.

Als verwendete Emulgatoren (E) sind sowohl anionische als auch nicht-ionische Emulgatoren geeignet. Vorzugsweise werden als grenzflächenaktive Substanzen Emulgatoren eingesetzt, deren relative Molekulargewichte üblicherweise unterhalb derer von Schutzkölloiden liegen. Auch kationische Emulgatoren können eingesetzt werden, sind jedoch nicht bevorzugt. Vorzugsweise wird eine Mischung aus nichtionischem und anionischem Emulgator eingesetzt.

Geeignete nichtionische Emulgatoren sind arylaliphatische oder aliphatische nicht-ionische Emulgatoren, beispielsweise ethoxylierte Mono-, Di- und Trialkylphenole (Ethoxylierungsgrad: 3 bis 50, Alkylrest: C₄-C₁₀), Ethoxylate langkettiger Alkohole (Ethoxylierungsrad: 3 bis 100, Alkylrest: C₈-C₃₆) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. Ethylenoxid/PropylenoxidBlockcopolymere. Bevorzugt werden Ethoxylate langkettiger Alkanole (Alkylrest C₁-C₃₀, mittlerer Ethoxylierungsgrad 5 bis 100) und darunter besonders bevorzugt solche mit einem linearen C₁₂-C₂₀-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (Ethöxylierungsgrad: 2 bis 50, Alkylrest: C₁₂-C₁₈) und ethoxylierter Alkylphenole (Ethoxylierungsgrad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als weitere anionische Emulgatoren sind ebenfalls Sulfobernsteinsäureester oder -halbester oderen Amide mit C5-C12 Alkyl-oder Cycloalkylgruppen in der Seitenkette oder auch Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus US 4,269,749, und im Handel erhältlich, beispielsweise als Dowfax^{®} 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyl-triethylammoniumchlorid oder quartäre Verbindungen von N-C₆-C₂₀-Alkylpyridinen, -morpholinen oder -imidazolen, z. B. N-Laurylpyridiniumchlorid.

Erfolgt die Herstellung der Polymere (P) in Gegenwart wenigstens einer grenzflächenaktiven Verbindung, wird diese im Allgemeinen in einer Menge von etwa 0,01 bis 10 Gew.-%, bevorzugt 0,1 bis 5 Gew.-%, ganz bevorzugt in einer Menge von 1 bis 3% bezogen auf die Menge an zu polymerisierenden Monomeren, eingesetzt.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes und/oder eine Polymersaat vorlegt, auf die Polymerisationstemperatur erhitzt, mit Polymerisationsinitiator versetzt und anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone unter Kühlung zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs zugeführt.

Die bei der Polymerisation entstandenen Dispersionen können im Anschluss an den Polymerisationsprozess einer physikalischen oder chemischen Nachbehandlung unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Bevorzugt weisen die erfindungsgemäß verwendeten Polymere (P) ein gewichtsmittleres Molekulargewicht M_{w} im Bereich von etwa 1 000 bis 2 000 000, bevorzugt 1 500 bis 1 000 000 und insbesondere 2 000 bis 500 000 auf. Die Molmassenbestimmung kann dabei durch Gelpermeationschromatographie mit einem Standard, wie Polymethylmethacrylat, erfolgen.

Die Glasübergangstemperatur T_{g} der erfindungsgemäß verwendeten Polymere (P) liegt vorzugsweise zwischen -50°C und 100°C, besonders bevorzugt zwischen -20°C und 70°C, insbesondere zwischen -5°C und 60°C.

Den erfindungsgemäßen Polymerdispersionen können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit^{®} C der BASF Aktiengesellschaft), Komplexbildner, Desodorantien, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Die wässrige Polymerdispersion weist üblicherweise einen Feststoffgehalt von 20 bis 70 Gew.-%, vorzugsweise 35 bis 65 Gew.-%.

Diese erfindungsgemäß verwendeten Polymerdispersionen sind geeignet durch ihre Verwendung in Bauklebern, Spachtelmassen, Putzen und Anstrichmitteln das Brandverhalten der daraus hergestellten Putze, Anstriche Baukleber oder Spachtelmassen zu verbessern. Die Zusammensetzung ist so gewählt, dass die Dispersionen verträglich mit den Zuschlagsstoffen der Formulierungen, wie Füllstoffen, Pigmenten, Lösemittel und Rheologiemodifiziermittel sind.

Bezüglich bevorzugter Ausführungsformen der erfindungsgemäßen Polymerdispersionen wird in vollem Umfang auf die zuvor im Rahmen der erfindungsgemäßen Verwendung gemachten Ausführungen Bezug genommen.

Die zur Bereitstellung der Polymere (P) durch radikalische Emulsionspolymerisation verwendeten Monomerzusammensetzung können erfindungsgemäß neben den Monomeren (M1) und tert. Butyl(meth)acrylat bis zu 4,99 Gew.-% weiterer Monomere, bezogen auf das Gesamtgewicht der zur Emulsionspolymerisation eingesetzten Monomere, umfassen. Als weitere Monomere kommen insbesondere die zuvor im Rahmen der Verwendung als weitere geeignete Monomere (M1) sowie die zuvor als Vernetzer genannten Monomere in Betracht. Üblicherweise wird jedoch der Anteil der zur radikalischen Emulsionspolymerisation verwendeten Monomerzusammensetzung 3 Gew.-%, bevorzugt 1 Gew.-% und besonders bevorzugt 0,1 Gew.-% an weiteren Monomeren nicht überschreiten.

In einer speziellen Ausführungsform der vorliegenden Erfindung addieren sich die Anteile an Monomeren (M1) und tert. Butyl(meth)acrylat in den zur radikalischen Emulsionspolymerisation verwendeten Monomerzusammensetzung zu 100 Gew.-%, bezogen auf das Gesamtgewicht der zur Emulsionspolymerisation eingesetzten Monomere, d.h. die Polymere (P) enthalten neben den Monomeren (M1) und tert. Butyl(meth)acrylat keine weiteren Monomere in einpolymerisierter Form.

Bevorzugt ist das in den erfindungsgemäßen Polymerdispersion enthaltene Polymer (P) durch eine Emulsionspolymerisation erhältlich, bei der wenigstens ein Teil der Monomere (M1) ausgewählt ist unter Estern α,β-ethylenisch ungesättigter Mono- und Dicarbonsäuren mit C₁-C₈-Alkanolen. Bezüglich weiterer bevorzugen Bedeutungen und Mengen der Monomere (M1) in den erfindungsgemäßen Polymerdispersionen (PD) wird in vollem Umfang auf die zuvor gemachten Ausführungen verwiesen.

Die zuvor beschriebenen erfindungsgemäßen Polymerdispersionen können als solche oder gemischt mit weiteren, in der Regel filmbildenden Polymeren als Bindemittelzusammensetzung in Bauklebern, Spachtelmassen und Putzen, wie hochgefüllten, rein polymergebundenen Putzen, Kalk- und Zementputzen mit Polymeranteil, Silikatputzen mit Polymeranteil, aber auch Spezialputzen, sowie in wässrigen Anstrichmitteln, wie Farb- oder Lackmischungen, verwendet werden.

Die erfindungsgemäßen Polymerdispersionen kommen vorzugsweise in Putzen und wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}); vgl. Ullmann's Enzyklopädie der technischen Chemie, 4. Auflage, Band 15, S. 667. Anstrichmittel lassen sich anhand der PVK beispielsweise wie folgt einteilen:

| | |
|---|---|
| hochgefüllte Innenfarbe, waschbeständig, Abriebklasse 3 (DIN EN 13300), weiß/matt | ca. 80-85 |
| Innenfarbe, scheuerbeständig, Abriebklasse 2 (DIN EN 13300), weiß/matt | ca. 70-80 |
| Halbglanzfarbe, seidenmatt | ca. 35-45 |
| Halbglanzfarbe, seidenglänzend (Latexfarbe) | ca. 25-35 |
| Hochglanzfarbe | ca. 15-25 |
| Außenfassadenfarbe, weiß | ca. 40-70 |
| Klarlack/Klarlasur | 0 |

Eine Ausführungsform der vorliegenden Erfindung betrifft Anstrichmittel in Form eines Klarlacks. Eine weitere Ausführungsform der vorliegenden Erfindung sind Anstrichmittel in Form einer Dispersionsfarbe.

Ein weiterer Gegenstand der Erfindung betrifft ein Anstrichmittel in Form einer wässrigen Zusammensetzung, enthaltend:
- wenigstens eine Polymerdispersion, wie zuvor definiert,
- wenigstens einen anorganischen Füllstoff und/oder wenigstens ein anorganisches Pigment,
- wenigstens ein übliches Hilfsmittel, und
- Wasser.

Bevorzugt ist ein Anstrichmittel, enthaltend:
- 5 bis 60 Gew.-% wenigstens einer Polymerdispersion , wie zuvor definiert,
- 10 bis 70 Gew.-% anorganische Füllstoffe und/oder anorganische Pigmente,
- 0,1 bis 20 Gew.-% übliche Hilfsmittel, und
- Wasser ad 100 Gew.-%.

Im Folgenden wird die Zusammensetzung einer üblichen Dispersionsfarbe erläutert. Dispersionsfarben enthalten in der Regel 30 bis 75 Gew.-% und vorzugsweise 40 bis 65 Gew.- % nichtflüchtige Bestandteile. Hierunter sind alle Bestandteile der Zubereitung zu verstehen, die nicht Wasser sind, zumindest aber das Gesamtgewicht an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa
a) 3 bis 90 Gew.-%, insbesondere 10 bis 60 Gew.-%, auf die erfindungsgemäße Polymerdispersion,
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Insbesondere eignen sich die erfindungsgemäßen Polymerdispersionen zur Herstellung von Fassadenfarben mit einer PVK im Bereich von 40 bis 70 oder Innenfarben mit einer PVK im Bereich von 70 bis 85.

Als Pigment werden im Rahmen dieser Erfindung zusammenfassend alle Pigmente und Füllstoffe, z. B. Farbpigmente, Weißpigmente und anorganische Füllstoffe bezeichnet. Dazu zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische organische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Das erfindungsgemäße Beschichtungsmittel (wässrige Anstrichmittel) kann neben der Polymerdispersion (PD), gegebenenfalls zusätzlichen filmbildenden Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Celluloseverdicker, Xanthane, Acrylatverdicker und Assoziativverdicker, wie Polyurethanverdicker. Die Menge des Verdickers beträgt vorzugsweise weniger als 2 Gew.-%, besonders bevorzugt weniger 1 Gew.-% bezogen auf Feststoffgehalt des Anstrichmittels, um die Wasserbeständigkeit des Putzes oder der Farbe nicht zu sehr herab zu setzen.

Zur Verbesserung des Brandverhaltens können den Farben und Putzen noch sogenannte Flammschutzmittel zugesetzt werden. Diese können halogenierte Flammschutzmittel, wie polybromierte Diphenylether, polybromierte Biphenyle oder beispielsweise Chlorparaffine oder Mirex sein, oder Stickstoff-basierte Flammschutzmittel, wie Melamin oder Harnstoff, oder Organophosphor-Flammschutzmittel, wie Tris(chlorethyl)phosphat, Trikresylphosphat, Resorcinol-bis(diphenylphosphat) oder anorganische Flammschutzmittel, wie Aluminiumhydroxid, Magnesiumhydroxid, Ammoniumsulfat, Aluminiumphosphat, Antimontrioxid, Zinkborate oder gelöschter Kalk.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen. Für die Erzielung hoher Festkörper kann die Dispersion in verdünnter Form auch während der Herstellung der Pigmentpaste zum Einsatz gebracht werden.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Das erfindungsgemäße Anstrichmittel kann in üblicher Weise auf Substrate aufgebracht werden, z. B. durch Streichen, Spritzen, Tauchen, Rollen, Rakeln.

Es wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Vorzugsweise findet das Anstrichmittel für Gebäudeinnenteile, z. B. Innenwände, Innentüren, Vertäfelungen, Treppengeländer, Möbel etc. Verwendung.

Die erfindungsgemäßen Anstrichmittel zeichnen sich durch einfache Handhabung, gute Verarbeitungseigenschaften und hohes Deckvermögen aus. Die Anstrichmittel sind schadstoffarm. Sie haben gute anwendungstechnische Eigenschaften, z. B. eine gute Wasserfestigkeit, gute Verschmutzungsresistenz, Wasserfestigkeit und Bewuchsresistenz. Das verwendete Arbeitsgerät lässt sich leicht mit Wasser reinigen.

Zudem weisen die aus den erfindungsgemäßen Anstrichmitteln hergestellten Anstriche im allgemeinen einen geringen Anteil flüchtiger organischer Verbindungen auf.

Vor allem aber zeichnen sich die erfindungsgemäßen Anstrichmittel und Anstriche durch ein verbessertes Brandverhalten aus.

Putze sind eine Beschichtung für Innen- und Außenwände, meist in mehreren Lagen und in hoher Schichtstärke (mehrere Millimeter) aufgebracht. Der Putzauftrag erfolgt zur Glättung oder Verschönerung und, bei Außenanwendung, zum Feuchteschutz des Untergrundes.

Kunstharzputze bestehen aus einer Polymerdispersion als Bindemittel und meist groben Füllstoffen (bis max. 15 mm). Man setzt sie ausschließlich als dekorative Deckputze im Innen- und Außenbereich ein. Die Trocknung erfolgt physikalisch, das Bindemittel verklebt die diversen Inhaltsstoffe und stellt die Haftung zum Untergrund her. Die Vorteile der Kunstharzputze sind gute Haftung auf vielen Untergründen, geringe Rissanfälligkeit, Schlagregendichte und Wasserdampfdurchlässigkeit.

In der Zusammensetzung sind sich die auf dem Markt angebotenen klassischen Kunstharzputze einander sehr ähnlich. Neben den klassischen Kunstharzputzen gibt es noch eine Reihe von Putzen mit speziellen Eigenschaften:
- Siliconharzputze:
   Sie enthalten neben der Polymerdispersion ein Siliconharz als Bindemittel und ergeben Beschichtungen mit sehr hoher Wasserdampfdurchlässigkeit und geringer Empfindlichkeit gegen Regen.
- Silikatputze:
   Sie enthalten neben dem (mineralischem) Bindemittel Wasserglas bis zu 5 Gew. Prozent Polymerdispersion zur Stabilisierung. Silikatputze stehen zwischen reinen Kunstharz- und mineralischen Putzen. Sie haben ebenfalls hohe Wasserdampfdurchlässigkeit, aber auch eine hohe Wasserdurchlässigkeit die durch geeignete Maßnahmen, z. B. Hydrophobierung, verringert werden muss.

Natürlich beeinflusst die Wahl der Rezeptbestandteile (Bindemittel. Additive, Füllstoffe) das Materialverhalten, z. B. die Wasseraufnahme des Putzes.
Je nach Typ und gröbstem verwendeten Füllstoff müssen Kunstharzputze, wie folgende Aufstellung (nach DIN 18558) zeigt, Mindestmengen an Bindemittel enthalten:

| Typ | Max. Korngröße [mm] | Bindemittelanteil [fest auf Gesamtfeststoffgehalt, Gew,-%] |
|---|---|---|
| Außen- und Innenputz: | | |
| P Org. I | <= 1 | 8 |
| P Org. I | > 1 | 7 |
| | | |
| Nur Innenputz: | | |
| POrg.2 | <= 1 | 5.5 |
| P Org.2 | > 1 | 4,5 |

Folgende Verarbeitungseigenschaften für Putze sind wichtig:
Oberflächenbearbeitung mit möglichst geringem Kraftaufwand,
   - kein Schmieren oder Absacken des Putzes,
   - genügend lange offene Zeit zur Vermeidung von Ansatzstellen.

Beeinflussen lassen sich die Verarbeitungseigenschaften hauptsächlich durch Hilfsstoffe, wie z. B. zur Modifizierung der rheologischen Merkmale. Das Bindemittel spielt hierbei nur eine geringe Rolle.

Die Vielfalt der mit Kunstharzputzen erzielbaren Oberflächeneffekte wird durch die Kornzusammensetzung einerseits und das Applikationsverfahren andererseits bestimmt.
Ein beträchtlicher Anteil der Kunstharzputze wird heute, überwiegend im Außenbereich, in Wärmedämmverbundsystemen (WDVS) eingesetzt. Folgende Arten sind bekannt:
Streichputz,
Rollputz,
Spritzputz,
Kratzputz,
Reibeputz,
Rillenputz,
Modellierputz und
Buntstein-/Natursteinputz.
Streich-, Roll- und Spritzputze haben ihren Namen vom jeweiligen Applikationsverfahren und enthalten keine groben Füllstoffe. Ist Nacharbeiten der Oberfläche angebracht, spricht man von Modellierputz.

Kratzputze enthalten gleiche Anteile der Zuschlagsstoffe sehr unterschiedlicher Korngrößen. Beim Trocknen treten (durch Volumenschwund) die großen Kornteilchen deutlich hervor. Das Resultat ist eine Oberfläche, die jener eines mineralischen Kratzputzes ähnelt.

Reibe- und Rillenputze enthalten einen kleinen Anteil an Partikeln mit wesentlich größerem Korn, die beim Glätten ("Verscheiben") rillenförmige Spuren in der Oberfläche hinterlassen. Je nach Art des Glättens kann man eine Vielzahl runder oder gerader Strukturen erhalten.

Ein beträchtlicher Anteil der Kunstharzputze wird heute, überwiegend im Außenbereich, in WDVS eingesetzt. Ein WDVS-System besteht aus:
Klebstoffschicht,
Wärmedämmplatte,
Spachtelmasse mit eingelegter Bewehrung und
Deckputz.

Der Klebstoff muss den Kontakt der Wärmedämmung zum Untergrund sicherstellen und deshalb gut auf beiden Komponenten haften. Die Wärmedämmung (meist Mineralfaser-Platten oder Platten aus Styropor®) sind das eigentliche Kernstück des WDVS. Sie müssen eine niedrige Wärmeleitfähigkeit und ausreichende Zugfestigkeit haben und unverrottbar sein. Auf kritischem Untergrund werden sie zusätzlich mit Spezialdübeln befestigt. Als Bindemittel der Spachtelmasse wird fast immer der Klebstoff verwendet. In die Masse wird die Bewehrung bzw. Armierung eingelegt, die mechanische und thermische Spannungen zwischen dem Untergrund bzw. den Dämmplatten und der Deckschicht ausgleicht.

Diese Schicht muss vor allem eine hohe Zugfestigkeit bei geringer Dehnung haben. Meist werden darin Glasfasergewebe eingesetzt; Kunststoffgewebe sind wegen ihrer Thermoplastizität nicht geeignet. Der Deckputz sollte zu einem gewissen Grad elastisch sein, doch prinzipiell ist hierfür ein normaler Kunstharzputz geeignet. An die Putzverarbeitung werden die üblichen Forderungen gestellt.

Ein weiterer Gegenstand der Erfindung sind Putze enthaltend
- wenigstens eine Polymerdispersion, wie zuvor definiert
- wenigstens ein Netz- oder Dispergiermittel
- wenigstens ein anorganisches Pigmente und/oder wenigstens einen anorganischen Füllstoff
- weitere übliche Hilfsmittel, wie Konservierungsmittel, Entschäumer, Verdicker, Filmbildehilfsmittel oder Hydrophobierungsmittel.

Die Wahl des Verdickers ist sehr kritisch für die Verarbeitungseigenschaften des Putzes. So sorgt ein carboxylgruppenhaltiges Polymerisat, wie Latekoll® für eine ausreichende Nasshaftung und ermöglicht, dass beim Nachscheiben absolut schmierfrei gearbeitet werden kann.

Auch die verschiedenen Celluloseether beeinflussen die Verarbeitungseigenschaften. Methyl- oder Hydroxyethylcellulose ermöglichen eine gute Nasshaftung, wobei es aber zu leichtem Schmieren des Putzes kommen kann. Methylhydroxypropylcellulose gestattet gute Nasshaftung ohne Schmieren. Die Entschäumerwahl ist ebenfalls sehr wichtig. Im Falle von Buntsteinputzen kann freilich eine gewisse Schaumbildung zur Erzielung eines geschmeidigen, gut verarbeitbaren Putzes sogar erwünscht sein.

Mögliche weitere Zusätze: Glykol (max. 2 %) trägt zur Erhöhung der Frostbeständigkeit im Gebinde bei. Höhere Zusätze an Glykol setzen allerdings die Viskosität herab. Weichmacher, z. B. Plastilit® 3060, dienen der Flexibilisierung des Putzes.
Bei solchen Zusätzen muss berücksichtigt werden, dass diese die Trocknung beeinflussen und bei einem Siedepunkt von< 250°C bislang als VOC eingestuft werden müssen. Oberflächenaktive Substanzen, wie Emulgatoren, verbessern die Verarbeitungseigenschaften.

Die Herstellung derartiger Putze erfolgt heute meist in horizontalen Zwangsmischern. Da sowohl ein sehr hoher Feststoffgehalt als auch hohe Viskosität erzielt werden sollen, ist es notwendig die Dispersion vorzulegen. Ihr werden dann alle Additive und zum Schluss die Füllstoffe zugegeben.

Ein weiterer Gegenstand der Erfindung ist ein Wärmedämmverbundsystem (WDVS) enthaltend
- wenigstens eine Polymerdispersion, wie zuvor definiert,
- eine Klebstoffschicht
- eine Wärmedämmplatte
- eine Spachtelmasse mit eingelegter Bewehrung
- einen Deckputz, sowie
- weitere übliche Hilfsstoffe.

Die Erfindung wird anhand der folgenden nicht einschränkend auszulegenden Beispiele näher erläutert.

### Beispiel Dispersionen

### Herstellung der Standarddispersion = n-BA / MMA Copolymer (49,2 / 48,0 wt%) (Beispiel A)

In einem mit Rührer, Thermometer, Rückflusskühler und Zulaufgefäßen ausgestatteten Kessel wurde ein Gemisch von 231,09g Wasser, 4,50g einer 20%igen wässrigen Lösung von Arylsulfonat, 0,12g Kupfer-II-sulfat und 30,30g des Zulaufs 1 vorgelegt. Zulauf 1 bestand aus 244,14g Wasser, 8,0g einer 45%igen wässrigen Lösung von Dodecyldiphenylether-disulfonsäure-Natriumsalz, 12,0g einer 20%igen wässrigen Lösung von einem C₁₆C₁₈-Fettalkoholpolyethoxylat,(18EO), 7,80g Acrylsäure, 18,0g Acrylamid (50%ig), 295,20g n-Butylacrylat und 288,0g Methylmethacrylat.
Die Vorlage wurde unter Rühren auf 90°C erwärmt. Anschließend wurden unter Aufrechterhaltung dieser Temperatur 3,43g einer 7%igen wässrigen Lösung von Natriumperoxodisulfat zugegeben und 5 min gerührt. Danach wurde Zulauf 1 in 180 min und parallel dazu 15,43g einer 7%igen wässrigen Lösung von Natriumperoxodisulfat in 180 min zudösiert.

Nach Beendigung von Zulauf 1 wurde 15 min nachgerührt und mit 13,08g Natronlauge (6,5%ige wässrige Lösung) neutralisiert. Danach wurden 9,06g tert.-Butylhydroperoxid (4%ige wässrige Lösung) und 13,16g Acetonbisulfit (4,6%ige wässrige Lösung) in 60 min zudosiert. Nach Beendigung der Zugaben wurden 34,97g Wasser zugegeben.

Anschließend wurde die Dispersion abgekühlt, mit 20,88g Natronlauge (4,9%ige wässrige Lösung) neutralisiert und über einen 125µm-Filter filtriert. Es wurden 1,22 kg einer 50%igen koagulatfreien Dispersion erhalten. Die physikalischen Daten der Dispersion sind in Tabelle 2 angeführt.

### Herstellung von den Vergleichsdispersionen B, C und D

Drei Vergleichsdispersionen wurden vorbereitet:
▪ n-BA / Styrol Variante (56 / 41,2 wt%) Beispiel B
▪ EHA / MMA Variante (49 / 48,2 wt%) Beispiel C
▪ EHA/ Styrol Variante (44 / 53,2 wt%) Beispiel D

Das Beispiel B wurde wie folgendes hergestellt.

In einem mit Rührer, Thermometer, Rückflusskühler und Zulaufgefäßen ausgestatteten Kessel wurde ein Gemisch von 338,4g Wasser, 3g einer 20%igen wässrigen Lösung von Arylsulfonat, 0,12g Kupfer-II-sulfat und 37,11g des Zulaufs 1 vorgelegt. Zulauf 1 bestand aus 440,40g Wasser, 8,0g einer 45%igen wässrigen Lösung von Dodecyl-diphenyletherdisulfonsäure-Natriumsalz, 12,0g einer 20%igen wässrigen Lösung von einem C₁₆C₁₈-Fettalkoholpolyethoxylat (18EO), 7,80g Acrylsäure, 18,0g Acrylamid (50%ig), 336,0g n-Butylacrylat und 247,2g Styrol.
Die Vorlage wurde unter Rühren auf 95°C erwärmt. Anschließend wurden unter Aufrechterhaltung dieser Temperatur 10,06g einer 2,4%igen wässrigen Lösung von Natriumperoxodisulfat zugegeben und 5 min gerührt. Danach wurde Zulauf 1 in 150 min und parallel dazu 18,72g einer 2,6%igen wässrigen Lösung von Natriumperoxodisulfat in 150 min zudosiert.

Nach Beendigung von Zuläufen 1 & 2 wurden 8,57g einer 7%igen wässrigen Lösung von Natriumperoxodisulfat zugegeben. Danach wurde 45 min nachgerührt und mit 12,6g Ammoniak (4,8%ige wässrige Lösung) neutralisiert. Danach wurden 9,08g tert.-Butylhydroperoxid (4%ige wässrige Lösung) und 13,15g Acetonbisulfit (4,6%ige wässrige Lösung) in 60 min zudosiert. Nach Beendigung der Zugaben wurden 34,97g Wasser zugegelben.

Anschließend wurde die Dispersion abgekühlt, mit 12,54g Natronlauge (8,1%ige wässrige Lösung) neutralisiert und über einen 125µm-Filter filtriert. Es wurden 1,53 kg einer 40%igen Dispersion erhalten.

Beispiele C und D wurden analog wie das Beispiel B hergestellt. Für Beispiel C wurde der Zulauf 1 mit 289,2g Methylmethacrylat und 294g Ethylhexylacrylat vorbereitet. Im Beispiel D wurde der Zulauf 1 mit 264g Ethylhexylacrylat und 319,2g Styrol vorbereitet.

Herstellung der t-Butylacrylat-haltigen Dispersionen (Beispiele E bis J, L, M, O bis R, T und U)
Auf der Basis der Standarddispersion (Beispiel A) wurden verschiedene t-BA-haltigen Dispersionen hergestellt. Die Glasübergangstemperatur wurde von 0 bis 40°C variiert.
▪ n-BA / MMA / t-BA Variante → mit 30-70 wt% t-BA
▪ n-BA / Styrol / t-BA Variante → mit 30 wt% t-BA
▪ n-BA / t-BA / VAc Variante → mit 45-55 wt% t-BA & 14-20 wt% VAc
▪ n-BA / MMA / t-BA / VAc → mit 30-35 wt% t-BA & 14-15 wt% VAc
▪ n-BA / EA / t-BA / VAc → mit 49 wt% t-BA & 20 wt% VAc
▪ n-BA / MMA / t-BA / EA → mit 35 wt% t-BA
n-BA = n-Butylacrylat
MMA = Methylmethacrylat
t-BA = tert-Butylacrylat
VAc = Vinyl Acetat
EA = Ethylacrylat

**Tabelle 1: Zusammensetzung der Beispiele E bis O**

| Muster | Beschreibung | t-BA (g) | n-BA (g) | MMA (g) | S (g) | VAc (g) | EA (g) |
|---|---|---|---|---|---|---|---|
| E | t-BA (50%) / n-BA (37,2%) / MMA (10%) | 300 | 223,2 | 60 | | | |
| F | t-BA (30%) / n-BA (40,8%) / MMA (26,4%) | 180 | 244,8 | 158,4 | | | |
| G | t-BA (30%) / n-BA (41%) / S (26,2%) | 180 | 246 | | 157,2 | | |
| H | t-BA (45%) / n-BA (32,2%) / VAc (20%) | 270 | 193,2 | | | 120 | |
| I | t-BA (50%) / n=BA (32,9%) / VAc (14,3%) | 300 | 197,4 | | | 85,8 | |
| J | t-BA (30%) / n-BA (36,4%) / MMA (16,8%) / VAc (14%) | 180 | 218,4 | 100,8 | | 84 | |
| L | t-BA (35%) / n-BA (30,7%) / MMA (31,5%) | 210 | 184,2 | 189 | | | |
| M | t-BA (49%) / n-BA (8,2%) / EA (20%) / VAc (20%) | 294 | 49,2 | | | 120 | 120 |
| O | t-BA (35%) / n-BA (17,6%) / MMA (24,6%) / EA (20%) | 210 | 105,6 | 147.6 | | | 120 |
| P | t-BA (30%) / n-BA (38,4%) / MMA (28,8%) | 180 | 230,4 | 172,8 | | | |
| Q | t-BA (35%) / n-BA (37,2%) / MMA (25%) | 210 | 223,2 | 150 | | | |
| R | t-BA (55%) / n-BA (27,9%) / VAc (14,3%) | 330 | 167,4 | | 85,8 | | |
| T | t-BA (35%) / n-BA (27,2%) / MMA (20%) / EA (15%) | 210 | 163,2 | 120 | | | 90 |
| U | t-BA (35%) / n-BA (23,7%) / MMA (18,5%) / EA (20%) | 210 | 142,2 | 111 | | | 120 |

### Herstellung der t-Butylmethacrylat-haltigen Dispersion (Beispiel K)

Auf der Basis der Vergleichsdispersionen wurde eine t-BMA-haltige Dispersionen hergestellt: t-BMA / nBA Variante mit der Zusammensetzung 48 und 49,2 Gew% der Hauptmonomere, das heißt für dieses Beispiel wurde der Zulauf 1 mit 288g tert.-Butylmethacrylat und 295,2g n-Butylacrylat vorbereitet.

### Herstellung der t-Butylacrylat-haltigen Dispersion im Beispiel N

Auf der Basis der Standarddispersion wurde eine t-BA-haltige Dispersion (Beispiels N) in 2-stufiger Fahrweise hergestellt.

In einem mit Rührer, Thermometer, Rückflusskühler und Zulaufgefäßen ausgestatteten Kessel wurde ein Gemisch von 231,09g Wasser, 4,50g einer 20%igen wässrigen Lösung von Arylsulfonat, 0,12g Kupfer-II-sulfat und 15,21g des Zulaufs 1 vorgelegt. Zulauf 1 bestand aus 83g Wasser, 4,0g einer 45%igen wässrigen Lösung von Dodecyl-diphenyletherdisulfonsäure-Natriumsalz, 6,0g einer 20%igen wässrigen Lösung von einem C₁₆C₁₈-Fettalkoholpolyethoxylat (18EO), 3,90g Acrylsäure, 9,0g Acrylamid (50%ig), 97,50g n-Butylacrylat, 105,0g tert.-Butylmethacrylat, 90,0g Vinylacetat und 40g einer 3%igen wässrigen Lösung von Natriumpyrophosphat.
Die Vorlage wurde unter Rühren auf 90°C erwärmt. Anschließend wurden unter Aufrechterhaltung dieser Temperatur 3,43g einer 7%igen wässrigen Lösung von Natriumperoxodisulfat zugegeben und 5 min gerührt. Danach wurde Zulauf 1 in 75 min und parallel dazu 36,86g einer 7%igen wässrigen Lösung von Natriumperoxodisulfat in 180 min zudosiert. Nach Ende von Zulauf 1 wurde Zulauf 2 unmittelbar in 75 min zu dosiert. Zulauf 2 bestand aus 83,3g Wasser, 4,0g einer 45%igen wässrigen Lösung von Dodecyl-diphenyletherdisulfonsäure-Natriumsalz, 6,0g einer 20%igen wässrigen Lösung von einem C₁₆C₁₈-Fettalkoholpolyethoxylat (18EO), 3,90g Acrylsäure, 9,0g Acrylamid (50%ig), 59,70g n-Butylacrylat, 105,0g tert.-Butylmethacrylat, 126,0g Methylmethacrylat und 40g einer 3%igen wässrigen Lösung von Natriumpyrophosphat.

Nach Beendigung von Zulauf 2 wurde 15 min nachgerührt und mit 13,08g Natronlauge (6,5%ige wässrige Lösung) neutralisiert. Danach wurden 11,82g tert.-Butylhydroperoxid (1,5%ige wässrige Lösung) und 11,82g Ascorbinsäure (1,5%ige wässrige Lösung) in 60 min zudosiert. Nach Beendigung der Zugaben wurden 16,54g Wasser zugegeben.

Anschließend wurde die Dispersion abgekühlt, mit 20,88g Natronlauge (4,9%ige wässrige Lösung) neutralisiert und über einen 125µm-Filter filtriert. Es wurden 1,23 kg einer ca. 50%igen koagulatfreien Dispersion erhalten.

Herstellung der t-Butylacrylat-haltigen Dispersion im Beispiel S
Auf der Basis der Standarddispersion wurde die t-BA-haltige Dispersion des Beispiels S hergestellt.

In einem mit Rührer, Thermometer, Rückflusskühler und Zulaufgefäßen ausgestatteten Kessel wurde ein Gemisch von 231,09g Wasser, 4,50g einer 20%igen wässrigen Lösung von Arylsulfonat, 0,12g Kupfer-II-sulfat und 29,73g des Zulaufs 1 vorgelegt. Zulauf 1 bestand aus 147,89g Wasser, 8,0g einer 45%igen wässrigen Lösung von Dodecyldiphenylether-disulfonsäure-Natriumsalz, 12,0g einer 20%igen wässrigen Lösung von einem C₁₆C₁₈-Fettalkoholpolyethoxylat (18EO), 7,80g Acrylsäure, 18,0g Acrylamid (50%ig), 195,0g n-Butylacrylat, 210,0g tert.-Butylacrylat, 88,2g Methylmethacrylat, 90,0g Vinylacetat und 80,0g einer 3%igen wässrigen Lösung von Natriumpyrophosphate.

Die Vorlage wurde unter Rühren auf 90°C erwärmt. Anschließend wurden unter Aufrechterhaltung dieser Temperatur 3,43g einer 7%igen wässrigen Lösung von Natriumperoxodisulfat zugegeben und 5 min gerührt. Danach wurde Zulauf 1 in 150 min und parallel dazu 36,86g einer 7%igen wässrigen Lösung von Natriumperoxodisulfat in 180 min zudosiert.

Nach Beendigung von Zulauf 1 wurde 15 min nachgerührt und mit 13,08g Natronlauge (6,5%ige wässrige Lösung) neutralisiert. Danach wurden 11,82g tert.-Butylhydroperoxid (1,5%ige wässrige Lösung) und 11,82g Ascorbinsäure (1,5%ige wässrige Lösung) in 60 min zudosiert. Nach Beendigung der Zugaben wurden 34,97g Wasser zugegeben.

Anschließend wurde die Dispersion abgekühlt, mit 20,88g Natronlauge (4,9%ige wässrige Lösung) neutralisiert und über einen 125µm-Filter filtriert. Es wurden 1,22 kg einer ca. 50%igen koagulatfreien Dispersion erhalten.

**Tabelle 2**

| Nachfolgend eine Tabelle mit den physikalischen Daten der verschiedenen vorbereiteten Dispersionen: | | | | | |
|---|---|---|---|---|---|
| A | | Standard Dispersion | | | |
| B-D | | Vergleichsdispersionen | | | |
| E bis J und L bis U | | t-BA-haltige Dispersionen | | | |
| K | | t-BMA-haltige Dispersion | | | |

| Name | Beschreibung | Feststoffgehalt (%) | LD-Wert (%) | Teilchengröße (nm) | Tg (°C) |
|---|---|---|---|---|---|
| A | n-BA (49,2%) / MMA (48%) | 48,2 | 87 | 135 | 17 |
| B | S (41,2%) / nBa (56%) | 39,0 | 83 | 121 | 13 |
| C | MMA (48,2%) / EHA (49%) | 39,5 | 86 | 135 | 12 |
| D | S (53,2%) / EHA (44%) | 39,4 | 79 | 124 | 20 |
| E | t-BA (50%) / n-BA (37,2%) / MMA (10%) | 48,2 | 89 | 135 | 14 |
| F | t-BA (30%) / n-BA (40,8%) / MMA (26,4%) | 48,8 | 86 | 141 | 16 |
| G | t-BA (30%) / n-BA (41 %) / S (26,2%) | 48,3 | 90 | 109 | 21 |
| H | t-BA (45%) / n-BA (32,2%) / VAc (20%) | 47,0 | 92 | 119 | 11 |
| I | t-BA (50%) / n-BA (32,9%) / VAc (14,3%) t-BA / n-BA / MMA / VAc | 47,9 | 91 | 121 | 11 |
| J | (30%) (36,4%) (16,8%) (14%) | 48,2 | 87 | 138 | 18 |
| K | tBMA (48%) / nBA (49,2%) | 37,3 | 85 | 147 | 21 |
| L | t-BA (35%) / n-BA (30,7%) / MMA (31,5%) | 48,8 | 86 | 143 | 25 |
| M | t-BA (49%) / n-BA (8,2%) / EA (20%) / VAc (20%) | 48,1 | 88 | 135 | 20 |
| N | t-BA (35%) / n-BA (26,2%) / MMA (21%) / VAc (15%) | 47,4 | 93 | 111 | 12 |
| O | t-BA (35%) / n-BA (17,6%) / MMA (24,6%) / EA (20%) | 47,3 | 88 | 131 | 24 |
| P | t-BA (30%) / n-BA (38,4%) / MMA (28,8%) | 49,0 | 89 | 127 | 19 |
| Q | t-BA (35%) / n-BA (37,2%) / MMA (25%) | 48,8 | 88 | 133 | 21 |
| R | t-BA (55%) / n-BA (27,9%) / VAc (14,3%) | 48,3 | 92 | 115 | 21 |
| S | t-BA (35%) / n-BA (32,5%) / MMA (14,7%) / VAc (15%) | 48,5 | 90 | 133 | 18 |
| T | t-BA (35%) / n-BA (27,2%) / MMA (20%) / EA (15%) | 48,5 | 87 | 145 | 19 |
| U | t-BA (35%) / n-BA (23,7%) / MMA (18,5%) / EA (20%) | 48,9 | 91 | 122 | 19 |

Der Feststoffanteil wurde gravimetrisch bestimmt; der pH-Wert mit einer Glassonde im unverdünnten Zustand, LD ist die Lichtdurchlässigkeit einer 0,01 Gew.%igen Dispersion, die einem Photometer (Gerät Hach DR/2010) bei 600 nm Wellenlänge bestimmt wurde; Teilchengröße wurde durch Lichtstreuung ermittelt (Gerät High Performance Particle Sizer HPPS 5001 from Malvern Instruments); Die Glastemperatur wurde mittels DSC bestimmt (Gerät DSC Q2000 V24.4, Build 116).

### Prüfung der Beispieldispersionen

### Thermogravimetrische Analyse

Die Dispersionen wurden durch eine Thermogravimetrische Analyse (TGA) analysiert, bei der die Masseänderung einer Probe in Abhängigkeit von der Temperatur und Zeit gemessen wird. Der Apparat TG50 von Mettler (Waage Mettler M3) wurde benutzt.

Aus den Dispersionen werden ca. 1 mm dicke Filme durch Trocknen (2 Tage bei 23°C) hergestellt. 10 bis 15 mg des Films werden in einem kleinen Tiegel aus feuerfestem inerten Material (z.B. Platin) eingewogen. Die Probe wird in einem Ofen auf Temperaturen bis zu 900°C erhitzt. Der Probenhalter ist an eine Mikrowaage gekoppelt, welche die Masseänderungen der Probe während des Aufheizvorgangs registriert. Ein dicht am Tiegel befestigtes Thermoelement misst die Temperatur. Während der Analyse wird der Probenraum je nach Bedarf mit verschiedenen Gasen gespült.
Zunächst wurde die Probe unter Stickstoff mit einer Geschwindigkeit von 10°C/min von 30°C auf 550°C und anschließend unter Luft mit einer Geschwindigkeit von 10°C/min von 550°C auf 900°C erhitzt. Die Zersetzung wird als eine Graphik Gewichtsabnahme gegen Temperatur gemessen.

Thermogravimetrische Analysen der t-BA-haltigen Dispersionsfilme (Beispiele E bis J & L bis O) gegenüber dem Standard (Beispiel A) wurden durchgeführt. Aus dem Vergleich der Pyrolysekurven können folgende Schlüsse gezogen werden. Die Standardfilm und die Vergleichspolymerfilme aus Beispiel B, C und D unterscheiden sich nicht signifikant.

Für alle Dispersionsfilme beobachtet man unterhalb von 200-210°C keine Gewichtsabnahme, das heißt kein Zerfall der Polymerketten. Ab 210°C zeigen die t-BA-haltigen Polymere eine deutliche Gewichtsabnahme im Vergleich zum Standard: bei 350°C liegt bei tBA haltigen Polymeren der verbliebene Anteil bei 55-80%, während beim Standard noch ca. 96-97% der Masse vorliegen.
Oberhalb von 390°C kreuzen sich die Kurven der t-BA-haltigen Filme und die des Standards: das heißt, dass sich in diesem Temperaturbereich der Standardfilm deutlich stärker zersetzt und brennbare Pyrolysegase freisetzt als die tBA-haltigen Filme. Normale Brandfeuer weisen Verbrennungstemperaturen von etwa 400-500°C auf. Wenn Polymerere in diesem Temperaturbereich Pyrolysegase freisetzten unterstützen sie damit den Brand und sind weniger für die gewünschte Anwendung geeignet. Spalten die Polymere bereits unterhalb dieser Temperatur bereits Masse ab, so verbleibt weitaus weniger Polymer übrig, das in dem kritischen Temperaturbereich den Brand unterhalten kann. Die besten Resultate zeigten die n-BA / t-BA / VAc Terpolymere: bei diesen ist der Anteil an brandunterstützenden Rückstand lediglich ca. 35% der Ausgangsmasse (bei 410°C).
Die Ergebnisse der TGA Messungen führen unter Praxisbedingungen auch wirklich zu einem verbesserten Brandverhalten, wie die folgenden "Brand-Tests" zeigen.

### "Brand-Tests"

Aus den obigen Dispersionen wurde jeweils nach folgender Formulierung eine Reibeputzformulierung hergestellt:

| | |
|---|---|
| 26,4 g | Dispersion, ca. 50%ig. |
| 1,6 g | Calgon N, 25% (Dispergiermittel, BK Giulini) |
| 0,6 g | Parmetol A26 (Biozid, Schülke & Mayr)) |
| 0,6 g | Agitan 280 (Entschäumer, Münzing Chemie GmbH) |
| 1,6 g | Latekoll D, 8% (Verdicker, BASF SE) |
| 2 g | Testbenzin K60 (Lösemittel) |
| 2 g | Butyldiglykol (Lösemittel) |
| 1,2 g | Basophob WDS (BASF SE) |
| 5,6 g | Kronos 2044 (Titandioxid, Weißpigment, Kronos Titan) |
| 79 g | Omyacarb 40GU (Calciumcarbonat, Füllstoff, Omya GmbH) |
| 51 g | Omyacarb 130GU (Calciumcarbonat, Füllstoff, Omya GmbH) |
| 13 g | Plastorit 0,5 (Mattierungsmittel, Luzenac GmbH) |
| 9 g | Quarz Rundkies 1,5mm (Körnung) |
| 6,4 g | Wasser |

Die Putzrezeptur wurde gemischt und jeweils 55g auf ein Glasgewebe von 5 mm Gitterabstand und 10*10 cm Größe mit der Traufel aufgeputzt und 1 Tag bei Raumtemperatur und anschließend 7 Tage bei 40°C im Trockenschrank getrocknet.
Die trockenen Putzmuster wurden senkrecht eingespannt und mit einem Gasbrenner (Campinggas Lötlampe, mittlere Brennerleistung) aus 5 cm Entfernung beflammt.

Der Putz aus Vergleichsdispersion B ist schon nach 37 Sekunden durchgebrannt, d.h. der Putz wird im Feuer mechanisch zerstört, hat Löcher in der Fläche bekommen und brennt auch auf der nicht direkt beflammten Rückseite.

Der Putz aus Vergleichsdispersion C ist schon nach 60 Sekunden durchgebrannt, d.h. der Putz wird im Feuer mechanisch zerstört, hat Löcher in der Fläche bekommen und brennt auch auf der nicht direkt beflammten Rückseite.

Der Putz aus Vergleichsdispersion D raucht stark bei der Beflammung, bleibt aber mechanisch stabil, d.h. er brennt nicht auf der Rückseite. Nach 30 Minuten Beflammung wurde der Versuch abgebrochen.

Der Putz aus der erfindungsgemäßen Dispersion K raucht kaum bei der Beflammung und bleibt auch mechanisch stabil, d.h. er brennt nicht auf der Rückseite. Nach 30 Minuten Beflammung wurde der Versuch abgebrochen.

### Cone-Kalorimeter-Tests

### → Putzformulierung

Aus den Dispersionen der Tabelle 1 (Versuche A, E bis J, P bis U) wurden Putzen nach folgender Rezeptur hergestellt und wie oben auf Glasgewebe aufgetragen und getrocknet.

| | |
|---|---|
| 66 g | Dispersion, ca. 50%ig |
| 4 g | Calgon N, 25% (Dispergiermittel) |
| 1,5 g | Parmetol A26 (Biozid, Schülke & Mayr) |
| 1,5 g | Agitan 280 (Entschäumer, Münzing Chemie GmbH) |
| 4 g | Latekoll D, 8% (Verdicker, BASF SE) |
| 5 g | Testbenzin K60 (Lösemittel) |
| 5 g | Butyldiglykol (Lösemittel) |
| 3 g | Basophob WDS (BASF SE) |
| 14 g | Kronos 2044 (Titandioxid, Weißpigment, Kronos Titan) |
| 180 g | Omyacarb 40GU (Calciumcarbonat, Füllstoff, Omya GmbH) |
| 100 g | Omyacarb 130GU (Calciumcarbonat, Füllstoff, Omya GmbH) |
| 45 g | Aluminiumhydroxid, 40µ (Flammschutzmittel) |
| 32,5 g | Plastorit 0,5 (Mattierungsmittel, Luzenac GmbH) |
| 100 g | Quarz Rundkies 1,5mm (Körnung) |
| 27,5 g | Wasser |

### → Versuchsbeschreibung "Cone Kalorimeter"

Die Prüfung erfolgt an Probekörpern, welche in horizontaler Ausrichtung durch einen oberhalb angeordneten Wärmestrahler mit konstanter Bestrahlungsstärke thermisch beansprucht werden. Zusätzlich wird ein Funkenzünder eingesetzt. Der Volumenstrom des Abluftventilators wird auf 0,024 m/s eingestellt. Als Bestrahlungsstärken wurden wahlweise 30 kW/m² oder 50 kW/m² eingestellt. Die Prüfung dauert 20 Minuten. Während der Prüfung wird das Verhalten der Probekörper dokumentiert.

Abmessungen der Probekörper: Für die Versuche werden Proben mit den Abmessungen (100 x I00 x 3) mm hergestellt. Die Probekörper werden vor der Prüfung bis zur Massenkonstanz, aber für mindestens 24 Stunden, bei 23 °C /50 % r. F. gelagert.
Die Wärmefreisetzungsrate wird über den Sauerstoffverbrauch berechnet, der während der Prüfung kontinuierlich ermittelt wird. Als Beurteilungsparameter wird die über die Zelt gemittelte Wärmefreisetzungsrate (ARHE, Average Rate of Heat Emission) berechnet und hieraus der MAHRE-Wert (Maximalwert von AHRE bezogen auf die Versuchsdauer) ermittelt.

### → Ergebnisse

Die Putzmuster, die aus den Dispersionen A, E-J und P-U hergestellt wurden, wurden dann im Cone-Kalorimeter nach der Norm "ISO 5660 Teil 1: 2002-12, Prüfung zum Brandverhalten getestet.

Für die Putzmuster, die aus den Dispersionen A und E-J hergestellt wurden, wurde ausgewertet der Maximalwert der mittleren Wärmeemission (MARHE) bei einer eingestrahlten Energie von 30 kW/m². Ein kleiner Zahlenwert für MAHRE ist natürlich günstiger für das reale Brandverhalten einer Farbe oder eines Putzes, als ein großer Zahlenwert.

| Name | Beschreibung | MARHE [kW/m²] |
|---|---|---|
| A | n-BuA (49,2%) / MMA (48%) | 44 |
| E | t-BuA (50%) / n-BuA (37,2%) /MMA (10%) | 41 |
| F | t-BuA (30%) / n-BuA (40,8%) / MMA (26,4%) | 41 |
| G | t-BuA (30%) / n-BuA (41 %) / S (26,2%) | 52 |
| H | t-BuA (45%) / n-BuA (32,2%) / VAc (20%) | 33 |
| I | t-BuA (50%) / n-BuA (32,9%) / VAc (14,3%) | 35 |
| J | t-BuA (30%) / n-BuA (36,4%) / MMA (16,8%) / VAc (14%) | 42 |

Es zeigt sich, dass die Muster mit t-BA-haltigen Dispersionen im Cone-Brandtest günstigere MARHE-Werte aufweisen. Ein höherer Anteil an Styrol ist schädlich im Test, da der Anteil an brennbaren Anteil ansteigt (Beispiel G, MAHRE 52; Eine Dispersion aus n-BuA

(49,2%) / S (48%) zeigt sogar einen MAHRE-Wert von 63). Besonders günstig schnitten die Muster ab, deren Polymer zusätzlich noch Vinylacetat enthalten (Muster H mit MARHE von 33).

Für die Putzmuster, die aus den Dispersionen P bis U hergestellt wurden, wurde ausgewertet in dieser Serie der Maximalwert der mittleren Wärmeemission (MARHE) bei einer eingestrahlten Energie von 50 kW/m². Wegen der höheren verwendeten Wärmestrahlung in dieser Versuchsreihe sind die Zahlenwerte der MAHRE nicht mit denen der Versuchsreihe mit 30 kW/m² vergleichbar. Ein kleiner Zahlenwert für MAHRE ist natürlich auch innerhalb dieser Versuchsreihe günstiger für das reale Brandverhalten einer Farbe oder eines Putzes, als ein großer Zahlenwert.

| Name | Beschreibung | MARHE [kW/m²] |
|---|---|---|
| P | t-BuA (30%) / n-BuA (38,4%) / MMA (28,8%) | 61 |
| Q | t-BuA (35%) / n-BuA (37,2%) / MMA (25%) | 55 |
| R | t-BuA (55%) / n-BuA (27,9%) / VAc (14,3%) | 49 |
| S | t-BuA (35%) / n-BuA (32,5%) / MMA (14,7%) / Vac (15%) | 53 |
| T | t-BuA (35%) / n-BuA (27,2%) / MMA (20%) / EA (15%) | 61 |
| U | t-BuA (35%) / n-BuA (23,7%) / MMA (18,5%) / EA (20%) | 52 |

Es zeigt sich, dass die Muster mit t-BA-haltigen Dispersionen im Cone-Brandtest mit 50 kWh/m² getestet günstigere MARHE-Werte aufweisen. Im Vergleich weist eine Rein Acrylat Dispersion aus n-BuA (49,2%) und MMA (48%) einen MAHRE-Wert von 70 und eine Styrol/Acrylate Dispersion aus n-Bua (49,2%) und Styrol (48%) einen MAHRE-Wert von 100. Besonders günstig schnitten die Muster ab, deren Polymer zusätzlich noch Vinylacetat oder Ethylacrylat enthalten.

## Patentansprüche

1. Verwendung einer wässrigen Polymerdispersion enthaltend wenigstens ein, durch radikalische Emulsionspolymerisation wenigstens eines ethylenisch ungesättigten Monomers (M1) und 25 bis 60 Gew.-% tert. Butyl(meth)acrylat, erhältliches Polymer (P), als Bindemittel in bauchemischen Produkten, **dadurch gekennzeichnet, dass** die Mischung der Hauptmonomere (HM) ausgewählt ist aus der Gruppe tert Butyl(meth)acrylat mit Methylmethacrylat, n-BA / Vinylacetat, n-BA / MMA / Vinylacetat, n-BA / Ethylacrylat / Vinylacetat oder n-BA / MMA / Ethylacrylat.

2. Verwendung gemäß Anspruch 1, **dadurch gekennzeichnet, dass** es sich bei dem bauchemischen Produkt um ein Anstrichmittel handelt.

3. Verwendung gemäß Anspruch 1, **dadurch gekennzeichnet, dass** es sich bei dem bauchemischen Produkt um einen Putz handelt.

4. Verwendung gemäß Anspruch 1, **dadurch gekennzeichnet, dass** es sich bei dem bauchemischen Produkt um ein Wärmedämmverbundsystem handelt.

5. Verwendung gemäß Anspruch 1, **dadurch gekennzeichnet, dass** es sich bei dem bauchemischen Produkt um einen Baukleber handelt.

6. Verwendung gemäß Anspruch 1, **dadurch gekennzeichnet, dass** es sich bei dem bauchemischen Produkt um eine Spachtelmasse handelt.

7. Verwendung gemäß einem der Ansprüche 1 bis 6 zur Verbesserung des Brandverhaltens.

8. Verwendung gemäß einem der Ansprüche 1 bis 7, dadurch gekennezeichnet, dass die wâssrige Polymerdispersion 30 bis 45 Gew.-% tert. Butyl-meth)acrylat enthält.

9. Verwendung gemäß einem der Ansprüche 1 bis 8, dadurch gekennezeichnet, dass der Anteil der Monomere (M1) im Bereich von 40 bis 75 Gew.-%, bezogen auf das Gesamtgewicht der zur Emulsionspolymerisation eingesetzten Monomere liegt.

10. Verwendung gemäß einem der Ansprüche 1 bis, **dadurch gekennzeichnet, dass** der Hauptanteil der Monomere M1 (HM) mindestens 50 Gew.-% bezogen auf das Gesamtgewicht der Monomere (M1) beträgt.

11. Verwendung gemäß einem der Ansprüche 1 bis 10, **dadurch gekennzeichnet, dass** der Nebenanteil der Monomere M1 (NM) ausgewählt ist aus der Gruppe Acrylsäure, Methacrylsäure, Itaconsäure, Maleinsäure, Fumarsäure, Maleinsäureanhydrid, Acrylsäureamid, Methacrylsäureamid, und Mischungen davon.

12. Anstrichmittel enthaltend
- wenigstens eine wässrige Polymerdispersion gemäß einem der Ansprüche 1 bis 11
- wenigstens einen anorganischen Füllstoff und/oder wenigstens ein anorganisches Pigment
- wenigstens ein übliches Hilfsmittel und
- Wasser.

13. Wärmedämmverbundsystem (WDVS) enthaltend
- wenigstens eine wässrige Polymerdispersion, gemäß einem der Ansprüche 1 bis 11,
- eine Klebstoffschicht
- eine Wärmedämmplatte
- eine Spachtelmasse mit eingelegter Bewehrung
- einen Deckputz, sowie
- weitere übliche Hilfsstoffe.

14. Putze enthaltend
- wenigstens eine Polymerdispersion, gemäß einem der Ansprüche 1 bis 11
- wenigstens ein Netz- oder Dispergiermittel
- wenigstens ein anorganisches Pigmente und/oder wenigstens einen anorganischen Füllstoff
weitere übliche Hilfsmittel, wie Konservierungsmittel, Entschäumer, Verdicker, Filmbildehilfsmittel oder Hydrophobierungsmittel.

## Claims

1. The use of an aqueous polymer dispersion comprising at least one polymer (P), obtainable by free radical emulsion polymerization of at least one ethylenically unsaturated monomer (M1) and from 25 to 60% by weight of tert-butyl (meth)acrylate, as a binder in construction chemistry products, wherein the mixture of the main monomers (HM) is selected from the group consisting of tert-butyl (meth)acrylate with methyl methacrylate, n-BA/vinyl acetate; n-BA/MMA/vinyl acetate, n-BA/ethyl acrylate/vinyl acetate or n-BA/MMA/ethyl acrylate

2. The use according to claim 1, wherein the construction chemistry product is a paint.

3. The use according to claim 1, wherein the construction chemistry product is a render.

4. The use according to claim 1, wherein the construction chemistry product is a composite heat insulation system.

5. The use according to claim 1, wherein the construction chemistry product is a construction adhesive.

6. The use according to claim 1, wherein the construction chemistry product is a filling compound.

7. The use according to any of claims 1 to 6 for improving the fire behavior.

8. The use according to any of claims 1 to 7, wherein the aqueous polymer dispersion comprises from 30 to 45% by weight of tert-butyl (meth)acrylate.

9. The use according to any of claims 1 to 8, wherein the proportion of the monomers (M1) is in the range from 40 to 75% by weight, based on the total weight of the monomers used for the emulsion polymerization.

10. The use according to any of claims 1 to 9, wherein the main proportion of the monomers M1 (HM) is at least 50% by weight, based on the total weight of the monomers (M1).

11. The use according to any of claims 1 to 10, wherein the secondary proportion of the monomers M1 (NM) is selected from the group consisting of acrylic acid, methacrylic acid, itaconic acid, maleic acid, fumaric acid, maleic anhydride, acrylamide, methacrylamide and mixtures thereof.

12. A paint comprising
- at least one aqueous polymer dispersion according to any of claims 1 to 11
- at least one inorganic filler and/or at least one inorganic pigment
- at least one customary assistant and
- water.

13. A composite heat insulation system (CHIS) comprising
- at least one aqueous polymer dispersion according to any of claims 1 to 11
- an adhesive layer
- a heat insulation board
- a filling compound with embedded reinforcement
- a finish coat and
- further customary assistants.

14. A render comprising
- at least one polymer dispersion according to any of claims 1 to 11
- at least one wetting agent or dispersant
- at least one inorganic pigment and/or at least one inorganic filler
further customary assistants, such as preservatives, antifoams, thickeners, film-forming assistants or water repellents.

## Revendications

1. Utilisation d'une dispersion aqueuse de polymère contenant au moins un polymère (P) pouvant être obtenu par polymérisation par voie radicalaire en émulsion d'au moins un monomère éthyléniquement insaturé (M1) et 25 à 60% en poids de (méth)acrylate de tert-butyle, comme liant dans des produits chimiques de construction, **caractérisée en ce que** le mélange des monomères principaux (MP) est choisi dans le groupe formé par le (méth)acrylate de tert-butyle avec du méthacrylate de méthyle, le n-BA/acétate de vinyle, le n-BA/MMA/acétate de vinyle, le n-BA/acrylate d'éthyle/acétate de vinyle ou le n-BA/MMA/acrylate d'éthyle.

2. Utilisation selon la revendication 1, **caractérisée en ce qu'**il s'agit, pour le produit chimique de construction, d'un enduit.

3. Utilisation selon la revendication 1, **caractérisée en ce qu'**il s'agit, pour le produit chimique de construction, d'un crépi.

4. Utilisation selon la revendication 1, **caractérisée en ce qu'**il s'agit, pour le produit chimique de construction, d'un système composite d'isolation thermique.

5. Utilisation selon la revendication 1, **caractérisée en ce qu'**il s'agit, pour le produit chimique de construction, d'une colle de construction.

6. Utilisation selon la revendication 1, **caractérisée en ce qu'**il s'agit, pour le produit chimique de construction, d'un mastic.

7. Utilisation selon l'une quelconque des revendications 1 à 6 pour améliorer le comportement au feu.

8. Utilisation selon l'une quelconque des revendications 1 à 7, **caractérisée en ce que** la dispersion aqueuse de polymère contient 30 à 45% en poids de (méth)acrylate de tert-butyle.

9. Utilisation selon l'une quelconque des revendications 1 à 8, **caractérisée en ce que** la proportion de monomères (M1) se situe dans la plage de 40 à 75% en poids, par rapport au poids total des monomères utilisés pour la polymérisation en émulsion.

10. Utilisation selon l'une quelconque des revendications 1 à 9, **caractérisée en ce que** la proportion principale des monomères M1 (MP) représente au moins 50% en poids, par rapport au poids total des monomères (M1).

11. Utilisation selon l'une quelconque des revendications 1 à 10, **caractérisée en ce que** la proportion secondaire des monomères M1 (MS) est choisie dans le groupe formé par l'acide acrylique, l'acide méthacrylique, l'acide itaconique, l'acide maléique, l'acide fumarique, l'anhydride de l'acide maléique, l'amide de l'acide acrylique, l'amide de l'acide méthacrylique et les mélanges correspondants.

12. Enduit, contenant
- au moins une dispersion aqueuse de polymère selon l'une quelconque des revendications 1 à 11,
- au moins une charge inorganique et/ou au moins un pigment inorganique,
- au moins un adjuvant usuel et
- de l'eau.

13. Système composite d'isolation thermique (SCIT) contenant
- au moins une dispersion aqueuse de polymère selon l'une quelconque des revendications 1 à 11,
- une couche d'adhésif,
- un panneau d'isolation thermique,
- un mastic présentant une armature intégrée,
- un crépi de finition ainsi que
- d'autres adjuvants usuels.

14. Crépi contenant
- au moins une dispersion aqueuse de polymère selon l'une quelconque des revendications 1 à 11,
- au moins un agent mouillant ou dispersant,
- au moins un pigment inorganique et/ou au moins une charge inorganique,
d'autres adjuvants usuels, tels que des conservateurs, des antimousses, des épaississants, des adjuvants filmogènes ou des agents d'hydrofugation.
